# EUROPEAN PATENT SPECIFICATION

(11) **EP 2 348 699 B1**
(45) Date of publication and mention of the grant of the patent: **12.06.2013**
(21) Application number: 10151290.3
(22) Date of filing: 21.01.2010
(51) Int. Cl.: H04M 3/487, H04W 40/02

(54) **Data insertion during local calls in cellular telecommunications networks**
Dateneinfügung während lokaler Anrufe in zellularen Telekommunikationsnetzwerken
Insertion de données pendant des appels locaux dans des réseaux de télécommunications cellulaires

(43) Date of publication of application: 27.07.2011
(73) Proprietor: Telefonaktiebolaget L M Ericsson (publ), 164 83 Stockholm (SE)
(72) Inventor: Hellwig, Karl, 97539 Wonfurt (DE)
(74) Representative: HOFFMANN EITLE

(56) References cited:
- WO-A1-2009/090193
- WO-A2-02/43415
- US-A1- 2005 259 614

## Description

### Technical Field

The present invention relates to local calls in cellular communications networks. More specifically, the present invention relates to a method of handling a local call between at least two terminals in a cellular communications network, methods of operating a switching entity in a base station subsystem of a cellular communications network and of operating a network entity for use in a network subsystem of a cellular telecommunications network, and to respective switching and network entities.

### Background

Cellular communications networks usually rely on various network infrastructure equipment comprising, for example, so-called Base Transceiver Station (BTS), Base Station Controllers (BSC), Mobile-Services Switching Centers (MSC), and also gateways, such as the so-called Media Gateways (MGW). Such networks are further organized as comprising several so-called subsystems, such as a Base Station Subsystem (BSS) and a Network Subsystem (NSS), wherein the former is mainly concerned with handling radio communication to the service terminals that in most cases belong to subscribers to a respective communications service.

The service terminals are usually mobile devices, such as mobile phones, so-called Personal Digital Assistants (PDA), computer communications adapters, and the like. However, service terminals may also exist in the form of stationary communications equipment for use with cellular communications networks. Examples for the latter include stationary telephones, answering machines, and also communication modules as interfaces to control and/or supervision equipment as part of home or industrial control systems.

Further, on data transport level, modern cellular telecommunications networks usually provide at least two planes of communication, namely the so-called user and control planes. In such networks, the user plane carries all payload data, which consists of, for example, encoded speech data, encoded multimedia data, network or internet data, or any other form of payload data. On the other hand, the control plane, amongst other, carries respective data for controlling the data flow on the user plane, the communication toward and from service terminals, and/or network infrastructure equipment in general.

In other words, network infrastructure equipment exchange signals on the control plane such to handle and control data flow on the user plane. Typically, the amount of data on the user plane substantially exceeds the respective amount of data on the control plane. For example, during a telephone call between two service terminals there may be required a data flow in the order of several hundreds of kilobytes per minute on the user plane, whereas respective signaling on the control plane for controlling the call may only require some hundreds of bytes (e.g. subscription data, location of the call destination terminal, etc.)

In addition to the above, modern network infrastructure equipment, such as the aforementioned BSC, MSC, or MGW entities already well support interchangeability and interconnectivity. Further, such entities may also allow for a distribution of tasks to two or more respective entities. For example, more than one MSC handle switching of one or more network services.

As a consequence, it has not only become possible to share infrastructure equipment amongst several service operators, but also to locally separate the respective entities of a network such to account for principal data flow and/or other requirements that may have impact onto localization of respective equipment. As an example, network operators may prefer to locate one or more BTS at locations such to optimally meet service demand from the customers, and, at the same time, locate the respective BSC (and also other network infrastructure equipment) at other different locations. The latter may be chosen, for example, such to meet best economic, political, or other strategic requirements.

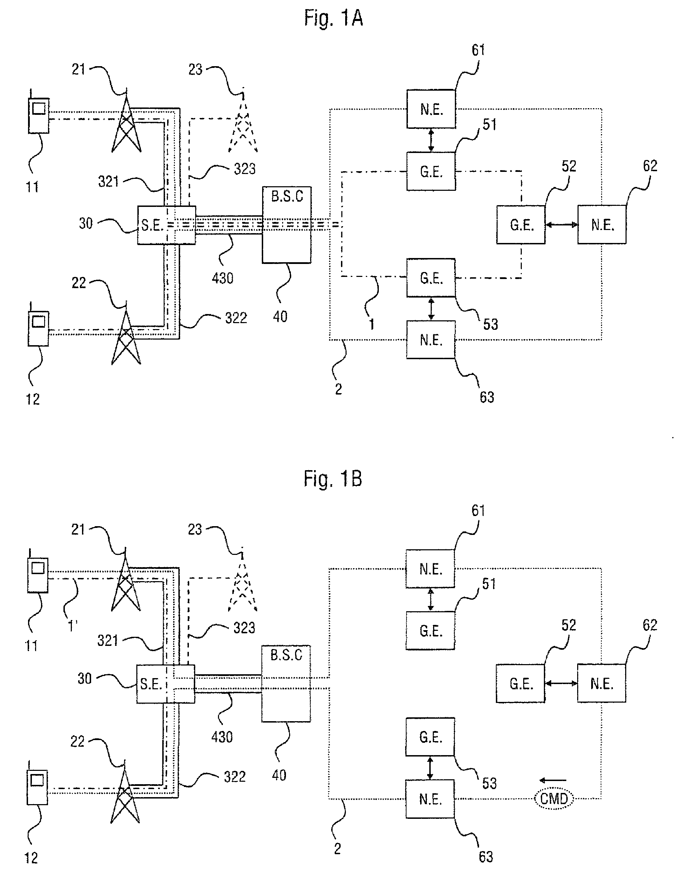

Fig. 1A shows a possible configuration of a cellular communications network that provides network service to service terminals, for example, to the two depicted terminals 11 and 12. For this purpose, the network may employ various infrastructure equipment, such as base transceiver stations 21, 22, and 23, a switching entity 30, a base station controller 40, network entities 61, 62, and 63, and also respective gateway entities 51, 52, and 53.

The switching entity 30 links the BTSs 21, 22, and 23 via respective links 321, 322, and 323 to the BSC 40 via one common link 432. The BSC 40 - in turn - is usually coupled to the one or more network entities 61, 62, 63, and the one or more gateway entities 51, 52, and 53 (MSCs and MGWs respectively). In this shown network, a separation into the aforementioned BSS and NSS may be drawn in that the BTSs 21, 22, 23, the switching entity 30, and the BSC 40 belong to the BSS, and the MSCs 61, 62, 63 and MGWs 51, 52, 53 belong to the NSS.

Further, as already mentioned above, modern cellular communication networks may also separate their data flow into two planes, such as the user plane 1 and the control plane 2. On the BSS side, both planes 1, 2 are handled by the same equipment, whereas on the NSS side, the two planes may be handled by different equipment: The network entities 61, 62, 63 handle the control plane 2, whereas the gateway entities 51, 52, 53 handle the user plane 1. However, since one gateway entity can be coupled to respective network entity, the latter is able, for example based on specific signaling on the control plane 2, to manipulate the user plane 1 by instructing the respective gateway entity accordingly.

As already mentioned above, modern infrastructure equipment allows interchangeability, interconnectivity, and also local separation. As a consequence, network operators may place the one or more BTSs 21, 22, 23 in an area such to meet a required or predetermined service demand. In this way, the BTSs 21, 22, 23 may be located in one town such to cover a respective municipal area. The switching entity 30 interconnects the plurality of these BTSs and is, therefore, usually located in the vicinity of the BTSs, such to allow for the respective links 321, 322, 323 to be realized as data cables, optical fiber cables, or microwave links.

Whereas the BTSs 21, 22, 23, and the switching entity 30 are located such to meet local or geographic requirements, the remainder of the infrastructure equipment, for example the base station controller 40 and the entities 51 to 63, is relatively independent from the actual location. Hence, a network operator may choose a location for all the remaining infrastructure equipment where, for example, the equipment can be run at lowest cost. In other words, whereas BTSs 21, 22, 23 and the switching entity 30 are located in one town, the remainder of the infrastructure equipment may be located in another town, in another country, or even on another continent.

The spatial separation of infrastructure equipment may, however, require data links, such as the link 430 that links the location of the BTSs 21, 22, 23 and the switching entity 30 to the respective other town, country, or continent. Depending on the distance, the link 430 may be realized as a long-distance cable link or even a satellite link. In this way, however, data flow over the link 430 may pose substantial cost to the network operator, who, in turn, may be willing to reduce data flow over the link 430 to a minimum. Further, the link 430 may also introduce a transmission delay such that, for example, a speech carried over the user plane 2 can be noticeable delayed. This may be particularly pronounced in cases of the link 430 being realized as a satellite link.

The scenario as shown in Figure 1A may, nevertheless, depict a usual situation in which the link 430 does not pose any serious limitations with respect to data flow, such that both the user plane 1 and the control plane 2 are handled over the link 430 between the switching entity 30 and the respective remainder of the network. If, however, call communication is effected between service terminals that are linked to the same switching entity 30 - via one or more BTSs - it may appear advantageous to short-cut the data-intense user plane 1, such that data flow over the link 430 can be substantially reduced. This can be of particular interest to the operator if data flow over the link 430 is associated with substantial cost.

Figure 1B shows another scenario in which such a user plane short-cut is already effected in that a user plane 1' is routed directly between the terminals 11 and 12 via the switching entity 30. This may result in a situation in which it is only required to carry the control plane 2 via the link 430 between the switching entity 30 and the base station controller 40. Since the amount of data on the control plane 2 is often substantially lower than on the user plane 1, 1', such short-cutting may substantially relieve data flow load on the link 430. Since during a local-switched call the user plane 1' is handled only by local infrastructure, the concept of short-cutting the user plane 1' in cellular communications network is also known as a so-called "local call - local switch" (LCLS). Besides relief to network links, this concept may also improve speech quality in respective mobile-to-mobile speech calls (call communication), since end-to-end transcoding free operation is a pre-requisite for LCLS; also the speech path delay is often substantially reduced by LCLS.

Although the concept of local call - local switch (LCLS) may substantially reduce data flow over network links, for example over link 430, establishing and handling of these local calls may, however, also result in an unavailability of certain network services, such as necessary core network functions. Although single plane communication between the terminals 11 and 12 can still be effected even in a local call situation over both planes 1', 2, there may be situations which require an interaction between the planes, i.e. between the user plane 1' and the control plane 2. For example, such interaction may be required in response to certain commands CMD that are sent over the control plane 2.

Modern networks support a variety of commands that are usually communicated via the control plane 2, and may, by their respective structure, also affect data flow on the respective user plane 1, 1' of the call communication. Such commands may include commands for inserting data into a data flow of the user plane 1, 1', such to, for example, insert specific sound signals into a data flow of one or more call communications on the respective user plane(s) 1. In this way, a command CMD may trigger the insertion of a prerecorded speech or voice message, a (warning) tone signal, or a so-called Dual Tone Multi-Frequency (DTMF) signal. Thus, a specific command CMD from an originating terminal 11 may result in a respective message or signal arriving at the destination terminal 12, although not being sent as such from the terminal 11.

As an example for such inter-plane interaction, Figure 1B shows the command CMD being sent from the terminal 11 over the control plane 2. Since the control plane 2 is routed over the link 430, the command CMD is forwarded by the BSC 40 to the network entities 61 to 63. If, for example, the command CMD requires manipulation of the user plane 1', one of the network entities 61 to 63 is supposed to execute the command CMD.

Conventionally, since the command CMD is to affect the user plane 1' of the call communication between the terminals 11, 12, one or more network entities 61, 62, 63 may be now required to establish a routing of the user plane 1' over the gateway entities 51, 52, 53, such that a specific network entity - here the network entity 63 - can successfully instruct the respective gateway entity 53 to manipulate the user plane 1 in accordance with the command CMD. In other words, it may be required to break the local switch and perform supplementary services within the core network as usual.

Another problem may arise when execution of the command CMD is completed and it is now to be determined that a local call could be re-established in order to reduce network and link load and/or improve quality of service. For example, it is difficult or even impossible to determine when a user decides to launch a subsequent command for inserting a DTMF-tone, after the completion of preceding DTMF command. Therefore, it will be difficult to determine whether re-establishing of a local call is feasible or not.

Further, switching between a LCLS-call and a non-LCLS call (regular call with both planes 1, 2 via the link 430) could also result in a step-like increase and decrease of transmission delay. In this way, information could get lost or the execution of time-critical commands, such as inserting DTMF-tones, could be rendered unreliable and/or impossible. The latter problems could particularly arise if the time scale of the command (e.g. 100 ms per DTMF-tone) is less or in the order of the delay-jump (e.g. approx. 300ms of the one-way satellite link delay).

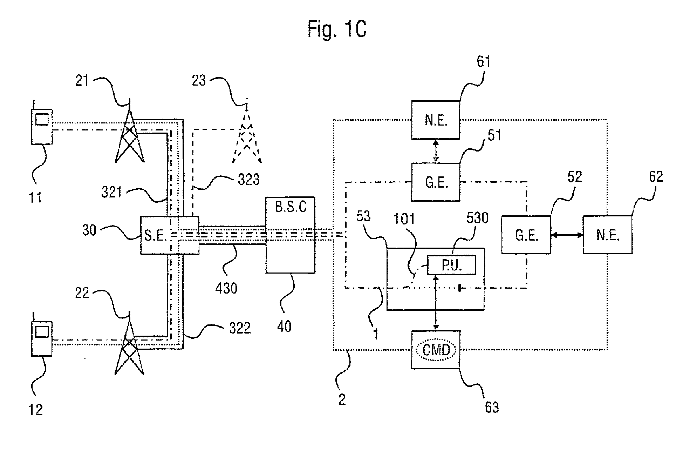

This situation is shown in Figure 1C. Prior to the establishing of a local call, or in response to the received command CMD, the user plane 1 is routed over the gateway entities 51, 52, 53 and over link 430 to the switching entity 30. In this way, both the user plane 1 and the control plane 2 between the switching entity 30 and the BSC 40 are routed via the link 430. Since the network entity 63 is now able to manipulate the user plane 1 - by means of the respective gateway entity 53 - this gateway entity 53 may now interrupt the user plane 1 and insert user data 101 into the data flow of the user plane 1. For this purpose, the gateway entity 53 may employ a processing and memory unit 530 which may, in turn, either retrieve or generate the user data 101 to be inserted in accordance with the command CMD.

However, in situations in which the establishing and maintenance of LCLS calls is desirable, re-establishing of the user plane via specific links and/or one or more entities as part of the NSS may pose several problems.

Besides a potentially higher cost for the operator due to increased data flow over specific links, there may also be required additional communication and computation resources on the NSS-side of the network that would be - otherwise - available to handle other calls. Further, manipulation of the user plane may effectively become impossible due to transmission delays that are introduced by long-distance links, such as satellite links.

In addition to the above, it is known from WO 02/43415 A2 to provide a so-called "proxy switch" between a base station subsystem and a mobile switching center. Only a subset of trunks carrying user traffic needs to be terminated on the proxy switch, while other trunks may directly connect the mobile switching center and the base station subsystem.

Further, there is known from US 2005/0259614 A1 a device for locally routing local call traffic within a radiocommunications network that employs a satellite link via a satellite and respective satellite ground equipment.

Finally, there is known from WO 2009/090193 A1 a method aimed at optimizing transmission resources via a so-called "intercellular loop-back".

### Summary

It is therefore an object of the present invention to provide an improved method of handling a local call-locally switched between at least two terminals in a cellular telecommunications network, to provide an improved method of operating a switching entity for use in a base stations subsystem of a cellular telecommunications network, and to provide an improved method of operating a network entity for use in a network subsystem of a cellular telecommunications network. It is further an object of the present invention to provide improved computer programs, improved computer program products, improved switching entities for use in base station subsystems of cellular telecommunications networks, and improved network entities for use in network subsystems of cellular telecommunications networks.

These objects are achieved by the subject-matter of the independent claims. Preferred embodiments are described in the dependent claims.

According to an embodiment of the present invention, a method of handling a local call between at least two terminals in a cellular telecommunications network is provided, this method comprising handling a user plane of a local call communication on a local side of the cellular telecommunications network; receiving, on the local side, a command from a remote side of the cellular telecommunications network; and in response to receiving the command, inserting local user data into a data flow of the user plane on the local side.

Thus, a command is both received and executed on the local side of a cellular telecommunications network. In this way, the command is received on the local side and respective local user data is inserted into the data flow of the user plane also on the local side. Therefore, the user plane may remain on the local side during local calls even if the user plane is to be manipulated in response to commands that are received from or generated on a remote side of the cellular telecommunications network.

As a consequence, re-establishing or establishing of a user plane on a remote side of the cellular telecommunications network is no longer necessary for manipulating data flow of the user plane. In this way, links between infrastructure equipment of the cellular telecommunications network need not to carry an increased amount of data which, in turn, can now be retained on the local side more often in network operation. In other words, core network functionality of supplementary service can now be provided on the local side of a cellular communications network, which both reduces network load in the core network and/or remote side and improves the quality of service for local calls.

According to another aspect of the present invention, a method of operating a switching entity for use in a base station subsystem of a cellular telecommunications network is provided, this method comprising handling a user plane of a local call communication; receiving a command from a remote side of the cellular telecommunications network; and in response to receiving the command, inserting local user data into a data flow of the user plane.

According to another embodiment of the present invention, a method of operating a network entity for use in a network subsystem of a cellular telecommunications network is provided, this method comprising handling a control plane of a local call communication between at least two terminals; receiving a command for inserting user data into a data flow toward at least one of the terminals, the data flow being of a user plane of the local call communication on a local side of cellular telecommunications network; in response to receiving the command, determining whether the at least one terminal is located at the network entity; forwarding the received command to the local side, if the at least one terminal is located at the network entity.

According to further embodiments of the present invention, a computer program and a respective computer program product are provided, wherein the computer program is loadable into a processing unit and comprises code adapted to perform a method of any embodiment of the present invention.

According to yet another embodiment of the present invention, a switching entity for use in a base station subsystem of a cellular telecommunications network is provided, the switching entity comprising a processing unit and a memory unit which are adapted to handle a user plane of a local call communication; to receive a command from a remote side of the cellular telecommunications network; and to insert local user data into a data flow of the user plane in response to received command.

According to still another embodiment of the present invention, a network entity for use in a network subsystem of a cellular telecommunications network is provided, the network entity comprising a processing unit and a memory unit which are adapted to handle a control plane of a local call communication between at least two terminals; to receive a command for inserting user data into a data flow toward at least one of the terminals, the data flow being of a user plane of the local call communication on a local side of cellular telecommunications network; to determine whether the at least one terminal is located at the network entity in response to the received command; to forward the received command to the local side, if the at least one terminal is located at the network entity.

### Brief Description of the Drawings

Embodiments of the present invention, which are presented for better understanding the inventive concepts but which are not to be seen as limiting the invention, will now be described with reference to the Figures, in which:
- Figures 1A to 1C: show schematic representations of call scenarios in cellular communications networks as of the conventional arts;
- Figure 2: shows a schematic representation of handling a local call in a cellular communications network according to a first embodiment of the present invention;
- Figure 3A: shows a schematic representation of a switching entity for use in a base station subsystem of a cellular telecommunications network according a second embodiment of the present invention;
- Figure 3B: shows a schematic representation of a network entity for use in a network subsystem of a cellular communications network according to a third embodiment of the present invention;
- Figure 4A: shows a flowchart of a method of handling a local call in a cellular telecommunications network according to a fourth embodiment of the present invention;
- Figure 4B: shows a flowchart of a method of operating a switching entity for use in a base station subsystem of a cellular telecommunications network according to a fifth embodiment of the present invention;
- and Figure 4C: shows a flowchart of a method of operating a network entity for use in a network subsystem of a cellular telecommunications network according to a fifth embodiment of the present invention.

### Detailed Description

As understood by the present invention, a cellular telecommunications network is separated at least into a local side and a remote side. These sides of a cellular telecommunications network may be defined in that entities of infrastructure equipment of one side and entities of infrastructure equipment of the other side communicate via one common link. In this context, the local side would then include a respective subset of infrastructure equipment that also handles the radio communication to the terminals, whereas the remote side would then include a remainder of infrastructure equipment of the cellular communications network, wherein the subset and the remainder of the infrastructure equipment communicate via one common link.

Thus, the local side may be defined by any infrastructure equipment that is coupled to a switching entity, which - in turn - channels and routes data flow from and to remaining infrastructure equipment of the cellular telecommunications network. In this way, the local side may be determined by one side of a communications link that constitutes such a common data transfer channel.

An example for a local side of cellular telecommunications networks may be the group of infrastructure equipment comprising BTSs that are coupled amongst each other by one or more switching entities which, in turn, collect and route data flow to the BSC. In other words, the link between the BSC and the one or more switching entities may constitute a boundary between the local side and the remote side.

Following the above example, the remote side of a cellular telecommunications network may thus be the group of infrastructure equipment being connected by such a common link to infrastructure equipment of one or more local sides. Hence, it may be again the link between the one or more switching entities and the BSC that constitutes the boundary of the remote side of the cellular telecommunications network. In this way, the remote side may be formed by one MSC, or a group thereof, and respective gateway entities such as the MGWs. It is to be noted, however, that a cellular telecommunications network may as well comprise a plurality of local sides, wherein one local side would then constitute a part of the remote side as seen from another local side, since the plurality of local sides may communicate amongst each other by the remote side.

However, the local and remote sides of a cellular telecommunications network may also be defined in terms of data network spaces in that the user plane of a local call communication resides on the local side, whereas the control plane of the respective local call communication resides on both the local and the remote side. In this way, the local and remote sides of cellular telecommunications network may also be defined in geographic terms in that the local side is a certain location, a group of locations, or also a geographic area, whereas the remote side would then be any location or area different from the location(s) or area of the local side.

In a similar manner, it is to be understood that a local call is a call or a call communication between at least two terminals being part of the same local side of the respective cellular telecommunications network. A local call may further be characterized in that the user plane of such a call is kept entirely on the respective local side, whereas the control plane may be routed along the local side and the remote side.

Further, the handling of a user plane may involve all actions necessary for establishing and/or maintaining data flow of a user plane between at least two terminals in a cellular telecommunications network. Said handling may, therefore, comprise the establishing of a user plane between the terminals in that respective infrastructure equipment, bandwidth, and radio resources are reserved and/or captured. This may occur, for example, in response to a call request from one of the involved service terminals. In a similar way, the handling of the user plane may also comprise forwarding, routing, and/or switching of data flow between two or more BTSs of a local side. However, handling of the user plane may also comprise forwarding back user plane data flow received from one BTS to the same BTS if, for example, the two or more service terminals communicate with the BTS.

Further, according to the present invention, it is to be understood that a service terminal should always be associated to at least one network entity. In other words, there is always at least one network entity that is responsible for the service terminal and/or communication or call communication to or from this terminal.

As an example of a subscription-based organization of the terminals within one or more cellular telecommunications networks, there is one network entity, such as an MSC, that holds account and authorization data of a specific service terminal, enabling authorized access to the cellular telecommunications network and also allowing for accurate billing the respective subscription account.

Further, one network entity may also be distinguished as the one entity to which a specific service terminal is associated in that this respective network entity is responsible for executing commands that affect user or control plane data flow to the respective service terminal. In this way, the associated network entity may be the one entity that is supposed to resolve and execute a received command requiring the manipulation of, for example, a user plane data flow toward the service terminal. Following this example, the one network entity would, in response to receiving the command, instruct a gateway entity such to manipulate user plane data flow.

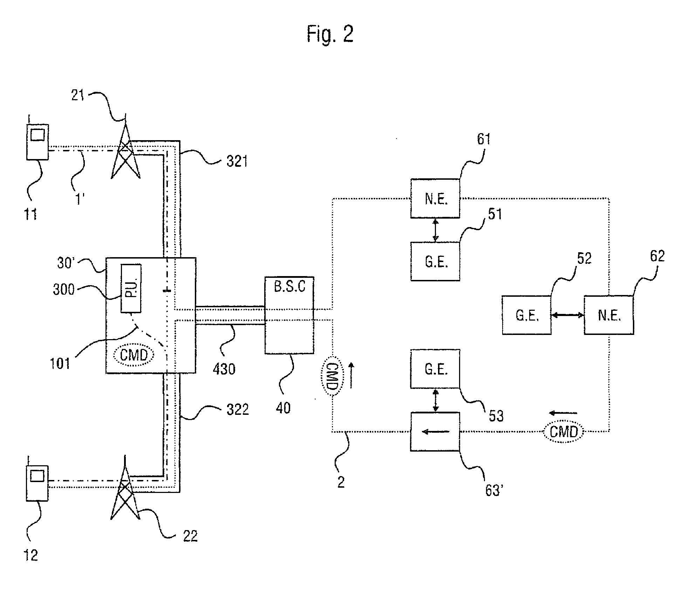

Figure 2 shows a schematic representation of handling a local call in a cellular telecommunications network according to a first embodiment of the present invention. As can be seen, the user plane 1' is handled on the local side by the switching entity 30'. Further, a command CMD has been sent from the service terminal 11 via the control plane 2 such to manipulate user plane data flow. Said command CMD is for manipulating the user plane data flow of the respective call communication amongst the involved service terminals, i.e. in this example between the service terminal 11 and the service terminal 12. The command CMD is forwarded by at least the network entities 61, 62 that handle the control plane 2 on the remote side of the cellular communications network.

According to this embodiment, also the network entity 63', to which the destination service terminal 12 is associated, forwards the command CMD to the local side, instead of attempting an execution of the command CMD. Said forwarding may, however, comprise adaption of the command CMD or even the generation of a new command within the network entity 63'. Once the (adapted) command CMD is received at the local side from the remote side at the switching entity 30', a processing unit 300 of the switching entity 30' - as an example for manipulating user plane data flow - interrupts the user plane 1' on the local side, generates or retrieves local user data 101 and inserts said local user data 101 into the user plane data flow on the local side.

In this way, the command CMD, which usually only requires substantially less amount of data as compared to the amount of data on the user plane 1', or even compared to the amount of user data 101, can be handled via the control plane on both sides, namely the local and the remote side of the cellular telecommunications network. Due to relatively little amount of data in conjunction with the command CMD, the link 430 may not pose any substantial problems with regard to link bandwidth or cost.

At the same time, however, it is possible to manipulate user plane data flow entirely on the local side by means of receiving the command CMD and executing the command CMD on the local side. In addition to this, re-establishing the user plane 1 also on the remote side of the cellular telecommunications network may no longer be required. In this way, not only link resources are saved, but also bandwidth and processing resources on the remote side, namely amongst and in the network and gateway entities 51 to 63'. In this context, the associated network entity 63' may no longer need to handle or execute the command CMD such to instruct the respective gateway entity 53 to accordingly manipulate the user plane data flow. Moreover, the respective gateway entity 53 may no longer need to employ resources for manipulating user plane data flow of local calls. Said resources may then be available for other tasks and for handling of other user and signal planes of remaining calls within the cellular telecommunications network.

An illustrative example of the command CMD is a command for inserting DTMF-tones into user plane data flow. In this context, the user plane 1' may need to be manipulated according to a specific time schedule which could be rendered difficult or even impossible in case the user plane is handled also on the remote side and the time scale of the schedule is in the order of a transmission delay as introduced by the link 430. In the example of inserting DTMF-tones into the data flow of the user plane 1', it may be apparent that a transmission delay of approx. 500ms to 1s (as typical for satellite links) may severely effect a reliable insertion of DTMF-tones or sequences that, usually, only last for shorter times, e.g. below 100ms.

It is to be noted, however, that the command CMD may well trigger also the insertion of another sound signal different from a DTMF-signal. In general terms, the sound signal which is to be inserted as local user data may be any one of a music signal, a speech signal, a DTMF-signal, or an inband-modem signal, the latter being used, for example, for text telephony. Further, also a combination of any of the above signals may be a signal that is to be inserted.

Referring back to the conventional arts as described in conjunction with Figures 1B and 1C, only the network entities 61 and 62 would forward the command CMD without any further action. Once, however, the command CMD would have reached the network entity 63, to which the destination terminal 12 is associated, the network entity 63 may now be required to, firstly, re-establish the user plane 1 over the gateway entities 51 to 53 (Fig. 1C), such that the network entity 63 could then, subsequently, instruct the respective gateway entity 53 to insert and/or manipulate the user plane 1 accordingly.

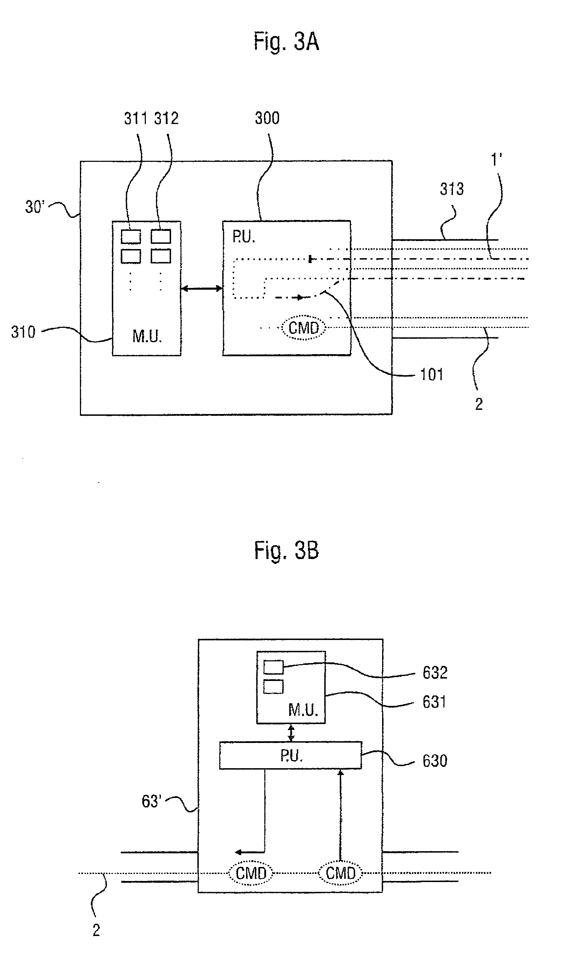

Figure 3A shows a schematic representation of a switching entity for use in a base station subsystem of a cellular telecommunications network according a second embodiment of the present invention. According to this embodiment, a switching entity 30' comprises at least one port 313 such to communicate with at least one BTS on the local side and a BSC on the remote side. The switching entity 30' handles both the user plane 1' as well as the signal plane 2 of a call communication between at least two service terminals on the respective local side of the cellular telecommunications network.

The switching entity 30' further comprises a processing unit 300 and a memory unit 310 for handling the respective call planes. Within the memory unit 310 one or more program sections 311 may be stored for not only handling the respective call planes, but also for receiving a respective command CMD from the remote side, and, in accordance with this command CMD, for interrupting data flow of the user plane 1' and for inserting local user data 101.

The memory unit 310 may further comprise another program section 311 for generating the local user data 101 in accordance with the received command CMD. In this way, the local user data 101 to be inserted into the user plane data flow may only be generated at the instance of receiving and/or executing the received command CMD. In this way, the switching entity 30' may, for example, generate encoded DTMF-sound data upon receiving the respective DTMF-command, e.g. in PCM-coding with ITU-T standard G.711 or also compressed data, compressed (encoded) with any of the 3GPP Codecs, such as GSM_FR, FR_AMR, etc, whatever is just used in this very moment on the User Plane.

Alternatively or additionally, the memory unit 310 may also comprise a memory section 312 for storing pre-encoded local user data 101 that is to be inserted in response to a received command CMD. Following the example of DTMF-tones, the memory section 312 may thus comprise pre-encoded data representing each of the possible DTMF-signals, which in turn, are encoded for each codec being handled by the switching entity 30'.

In other words, the switching entity 30' between the service terminals interrupts locally only in one direction the user plane 1' for, e.g., the duration of a DTMF burst or tone. Subsequently, the switch entity 30' again locally switches the user plane 1'. As a consequence, it may not be required to have the user plane between BSS and the core network (e. g. NSS) or within the core network. In this way, no core network resources are needed, no jump in speech path delay occurs, and the speech path in the opposite direction is not disturbed.

Figure 3B shows a schematic representation of a network entity for use in a network subsystem of a cellular communications network according to a third embodiment of the present invention. According to this embodiment, a network entity 63' comprises a processing unit 630 and a memory unit 631. Within the memory unit 631, program units 632 may be stored such to instruct the processing unit 630 to receive a command CMD via a control plane 2. The processing unit 630 may optionally generate a new command CMD that may be suitable for execution on the local side of the cellular telecommunications network or just forward the command CMD to the local side. According to this embodiment, the network entity 63' may also forward the command CMD even in cases the service terminals, to which the user plane data flow is to be manipulated, are associated to the network entity 63'. In other words, the network entity 63' refrains from manipulating the user plane data flow and/or instructing other remote side infrastructure equipment accordingly, and only forwards the command CMD to the local side.

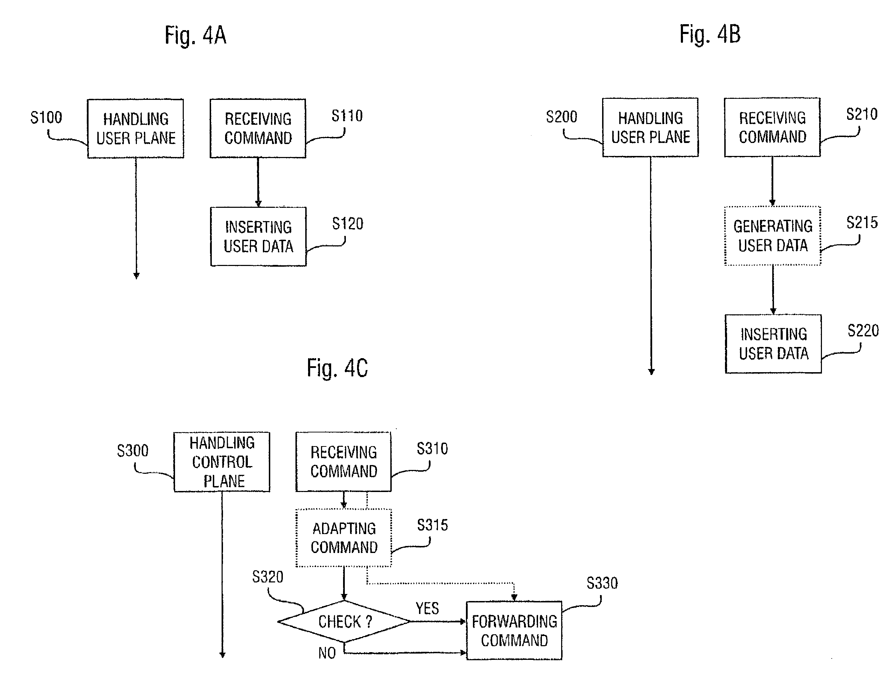

Figure 4A shows a flowchart of a method of handling a local call in a cellular telecommunications network according to a fourth embodiment of the present invention. According to this embodiment, the method comprises a handling S100 of a user plane of a local call communication on a local side of the cellular telecommunications network. In parallel thereto, the method also comprises a receiving S110, on the local side, of a command from a remote side of the cellular telecommunications network and an inserting S120 of local user data into a data flow of the user plane on the local side. The inserting S120 may usually be performed only in response to the receiving S110 of the command.

Figure 4B shows a flowchart of a method of operating a switching entity for use in a base station subsystem of a cellular telecommunications network according to a fifth embodiment of the present invention. According to this embodiment, the method comprises a handling S200 of a user plane of a local call communication. In parallel thereto, the method also comprises a receiving S210 of a command from a remote side of the cellular telecommunications network, and, in response to receiving S210 the command, an inserting S220 of local user data into a data flow of the user plane. The method may optionally comprise a generating S215 of the local user data in response to the receiving S210 of the respective command, and prior to inserting S220 the respective user data.

Figure 4C shows a flowchart of a method of operating a network entity for use in a network subsystem of a cellular telecommunications network according to a fifth embodiment of the present invention. According to this embodiment, the method comprises a handling S300 of a control plane of a local call communication between at least two terminals. In parallel thereto, the method also comprises a receiving S310 of a command for inserting user data into a data flow toward at least one of the terminals, wherein said data flow is of a user plane of the local call communication on a local side of cellular telecommunications network.

In response to the receiving S310, a check S320 is performed for determining whether the service terminal, to which user plane data flow is to be manipulated in accordance with the command, is associated to the network entity and/or whether a local call communication is taking place to this service terminal. If either association and/or a local call are determined, the received command is forwarded to the local side in step S330. Alternatively, the check S320 may be optional, such that the network entity directly forwards the command in step S330. Further, there may be provided an optional adapting of the command in step S315, for adapting the command such that it can be executed on the local side.

According to another embodiment of the present invention, the 16 different DTMF-tone-bursts can be generated offline and stored in speech-codec-compressed form in the BSS (in short SCC-DTMF). A required DTMF-symbol (x) can then be sent out-of-band from the MSC to the BSS, for example with a command such as "start DTMF(x)" and "stop DTMF(x)". The BSS may then take care that the correct SCC-DTMF-sequence (x) is inserted into the user plane data stream/flow towards the destination service terminal. The advantage of this method is that the BSS does not need to have detailed knowledge of the encoding algorithms and does not need expensive processing power for generating and encoding the ever identical data streams.

According to another embodiment of the present invention, DTMF-tone-bursts could be generated offline and stored in speech-codec-compressed form in a memory within the BSS. For 16 different DTMF-tone-bursts, there would be at least one SCC-DTMF for each DTMF-symbol that are x = {0, 1, 2, 3, 4, 5, 6, 7, 8, 9, *, #, etc.}, wherein the longest DTMF-tone-burst can be expected to be less than 5 seconds. With currently 13 different codec types or modes in GERAN (i.e. FR: 13 kbps, HR: 5.6 kbps, EFR: 12.2 kbps, AMR4.75, AMR5.90, AMR6.70, AMR7.40, AMR7.95, AMR10.2, AMR12.2, AMR-WB6.60, AMR-WB8.85, AMR-WB12.65) a total of 16 × 13 = 208 SCC-DTMFs would need to be generated and stored, each with about 2 kByte/s × 5 s, which does not pose too many requirements to processing and/or memory hardware. Generating the tone-bursts offline and storing them may provide the advantage that the respective sound signals need not to be generated repeatedly on demand, which, in turn, may substantially reduce required processing resources. The off-line generation allows also an optimal preparation of these SCC-DTMF signals, resulting in generally better reliability at receiver side within the terminal or the connected external receiving device.

Such DTMF-symbols or complete DTMF-Sequences may then be sent out-of-band in a protocol from the MSC to the BSC for the radio leg the DTMF are tailored to. Typical coding schemes for DTMF-sequences could use, for example, commands such as "start DTMF(x)" and "stop DTMF(x)", wherein exact start and stop timings, as well as the duration, are then known in an advantageous manner in advance. Further, some new messages and information elements (IEs) could be implemented between the MSC and the BSC to tell the radio access network, when and which DTMF-symbols are to be inserted.

Additionally, the BSS could take care of that the correct SCC-DTMF-sequence is inserted into the user plane data stream/flow towards the desired destination service terminal. The local switch is then interrupted locally in the respective direction for the duration of the DTMF bursts. Subsequently, the local switch can be locally applied again, wherein the user plane is not needed between the BSS and NSS (e.g. the core network or within the core network).

Hence, according to the embodiments of the present invention, advantages can be attained in that the local switch between the service terminals (mobile users) can be interrupted only locally and only in one direction and only exactly for the duration of the DTMF burst. Subsequently, the local switch can be locally applied again, so that the disturbance for the users is minimal. Another advantage is that the performance of the DTMF burst is optimal. The user plane between the BSS and the NSS (e. g. the core network and within the core network) may not be required, hence, resulting in a substantial relief for signaling, control plane load and also user plane load (the latter above all on the remote side). Further, no core network resources may be needed, which would be cumbersome to get or reserve for such rare events, no jump in speech path delay occurs which may substantially improve - or even allow for as such - DTMF tone insertion, and the speech path in the opposite direction may remain completely undisturbed (a delay jump of 600ms could result in a loss of communication for these 600ms).

Although detailed embodiments have been described, these only serve to provide a better understanding of the invention defined by independent claims, and are not to be seen as limiting.

## Claims

1. A method of handling a local call between at least two terminals in a cellular telecommunications network, the method comprising:
- handling (S100) a user plane of the local call involving establishing and/or maintaining data flow of the user plane, wherein the user plane of the local call is kept on a local side of the cellular telecommunications network, the local side comprising entities of infrastructure equipment that communicates via a common link to remaining entities of infrastructure equipment of the cellular telecommunications network **characterized by**;
- receiving (S110) a command on the local side; and
- in response to receiving the command, inserting (S120) local user data into a data flow of the user plane on the local side.

2. The method according to claim 1, wherein the command is received from a remote side of the cellular telecommunications network, the remote side comprising the remaining entities of infrastructure equipment of the cellular telecommunications network.

3. The method according to claim 1 or 2, wherein the command is received from one of the at least two terminals.

4. The method according to any of claims 1 to 3, wherein the method comprises handling of a control plane on the local side of the cellular telecommunications network.

5. The method according to claim 4, wherein the command is received via the control plane.

6. The method according to any of claims 1 to 5, wherein the method comprises generating the local user data on the local side.

7. The method according to any of claims 1 to 6, wherein the method comprises storing pre-defined local user data on the local side.

8. The method according to any of claims 1 to 7, wherein the local user data represents a sound signal.

9. The method according to claim 8, wherein the sound signal is one of a music signal, a speech signal, a tone signal, a dual-tone multi-frequency signal, or an inband-modem signal.

10. The method according to any of claims 1 to 9, wherein at least one terminal of the at least two terminals is a mobile terminal.

11. A method of operating a switching entity for use in a base station subsystem of a cellular telecommunications network, the method comprising:
- handling (S200) a user plane of a local call between at least two terminals, the handling (S200) involving establishing and/or maintaining data flow of the user plane, wherein the user plane is kept on a local side comprising entities of infrastructure equipment that communicates via a common link to remaining entities of infrastructure equipment of the cellular telecommunications network **characterized by**;
- receiving (S210) a command; and
- in response to receiving the command, inserting (S220) local user data into the data flow of the user plane.

12. The method according to claim 11, wherein the command is received from a remote side of the cellular telecommunications network, the remote side comprising the remaining entities of infrastructure equipment of the cellular telecommunications network.

13. The method according to claim 11 or 12, wherein the command is received from one of the at least two terminals.

14. The method according to any of claims 11 to 13, wherein the method comprises handling of a control plane between the local side and a remote side of the cellular telecommunications network.

15. The method according to claim 14, wherein the command is received via the control plane.

16. The method according to any of claims 11 to 15, wherein the method comprises generating (S215) the local user data.

17. The method according to any of claims 11 to 16, wherein the method comprises retrieving pre-defined local user data.

18. The method according to any of claims 11 to 17, wherein the local user data represents a sound signal.

19. The method according to claim 18, wherein the sound signal is one of a music signal, a speech signal, a tone signal, a dual-tone multi-frequency signal, or an inband-modem signal.

20. A method of operating a network entity for use in a network subsystem of a cellular telecommunications network, the method comprising:
- handling a control plane of a local call between at least two terminals, the user plane of the local call being kept on a local side comprising entities of infrastructure equipment that communicate via a common link to remaining entities of infrastructure equipment of the cellular telecommunications network **characterized by**;
- receiving a command for inserting user data into a data flow towards at least one of the terminals, the data flow being of a user plane of the local call communication on a local side of cellular telecommunications network;
- in response to receiving the command, determining whether the at least one terminal is associated to the network entity;
- forwarding the received command to the local side, if the at least one terminal is associated to the network entity.

21. The method according to claim 20, wherein the user data represents a sound signal.

22. The method according to claim 21, wherein the sound signal is one of a music signal, a speech signal, a tone signal, a dual-tone multi-frequency signal or an inband-modem signal.

23. The method according to any of claims 20 to 22, wherein the method comprises forwarding the received command to the local side, also if the at least one terminal is not associated to the network entity.

24. A computer program loadable into a processing unit, the computer program comprising code adapted to perform a method according to any of claims 1 to 23.

25. A computer program product comprising a computer program of claim 24.

26. A switching entity (30') for use in a base station subsystem of a cellular telecommunications network, the switching entity (30') comprising a processing unit (300) and a memory unit (310) which are adapted
- to handle a user plane of a local call between at least two terminals, which involves establishing and/or maintaining data flow of the user plane, wherein the user plane is kept on a local side comprising entities of infrastructure equipment that communicates via a common link to remaining entities of infrastructure equipment of the cellular telecommunications network **characterized in that** the processing unit and the memory unit are adapted ;
- to receive a command; and
- to insert local user data into a data flow of the user plane in response to received command.

27. The switching entity according to claim 26, being adapted to a method according to any of claims 11 to 19.

28. A network entity (63') for use in a network subsystem of a cellular telecommunications network, the network entity comprising a processing unit (630) and a memory unit (631) which are adapted
- to handle a control plane of a local call between at least two terminals, the user plane of the local call being kept on a local side comprising entities of infrastructure equipment that communicate via a common link to remaining entities of infrastructure equipment of the cellular telecommunications network **characterized in that** the processing unit and the memory unit are adapted ;
- to receive a command for inserting user data into a data flow toward at least one of the terminals, the data flow being of a user plane of the local call communication on a local side of cellular telecommunications network;
- to determine whether the at least one terminal is associated to the network entity in response to the received command;
- to forward the received command to the local side, if the at least one terminal is associated to the network entity.

29. The network entity according to claim 28, being adapted to a method according to any of claims 20 to 23.

## Patentansprüche

1. Verfahren zum Verwalten eines Ortsgesprächs zwischen mindestens zwei Endgeräten in einem Zell-Telekommunikationsnetz, wobei das Verfahren Folgendes umfasst:
- Verwalten (S100) einer Benutzerebene des Ortsgesprächs, was das Herstellen und/oder Aufrechterhalten eines Datenflusses der Benutzerebene beinhaltet, wobei die Benutzerebene des Ortsgesprächs auf einer lokalen Seite des Zell-Telekommunikationsnetzes gehalten wird, wobei die lokale Seite Entitäten von Infrastrukturausrüstung umfasst, die über eine gemeinsame Verbindungsstrecke zu übrigen Entitäten von Infrastrukturausrüstung des Zell-Telekommunikationsnetzes kommuniziert, **gekennzeichnet durch**
- Empfangen (S110) eines Befehls auf der lokale Seite; und
- in Reaktion auf das Empfangen des Befehls, Einfügen (S120) lokaler Benutzerdaten in einen Datenfluss der Benutzerebene auf der lokalen Seite.

2. Verfahren nach Anspruch 1, wobei der Befehl von einer räumlich abgesetzten Seite des Zell-Telekommunikationsnetzes kommend empfangen wird, wobei die räumlich abgesetzte Seite die übrigen Entitäten von Infrastrukturausrüstung des Zell-Telekommunikationsnetzes umfasst.

3. Verfahren nach Anspruch 1 oder 2, wobei der Befehl von einem der mindestens zwei Endgeräte kommend empfangen wird.

4. Verfahren nach einem der Ansprüche 1 bis 3, wobei das Verfahren das Verwalten einer Steuerungsebene auf der lokalen Seite des Zell-Telekommunikationsnetzes umfasst.

5. Verfahren nach Anspruch 4, wobei der Befehl über die Steuerungsebene empfangen wird.

6. Verfahren nach einem der Ansprüche 1 bis 5, wobei das Verfahren das Erzeugen der lokalen Benutzerdaten auf der lokalen Seite umfasst.

7. Verfahren nach einem der Ansprüche 1 bis 6, wobei das Verfahren das Speichern zuvor festgelegter lokaler Benutzerdaten auf der lokalen Seite umfasst.

8. Verfahren nach einem der Ansprüche 1 bis 7, wobei die lokalen Benutzerdaten ein Klangsignal darstellen.

9. Verfahren nach Anspruch 8, wobei das Klangsignal eines von Folgendem ist: ein Musiksignal, ein Sprachsignal, ein Tonsignal, ein Dualton-Mehrfrequenzsignal oder ein Inband-Modemsignal.

10. Verfahren nach einem der Ansprüche 1 bis 9, wobei mindestens ein Endgerät der mindestens zwei Endgeräte ein mobiles Endgerät ist.

11. Verfahren zum Betreiben einer Vermittlungsentität zur Verwendung in einem Basisstations-Teilsystem eines Zell-Telekommunikationsnetzes, wobei das Verfahren Folgendes umfasst:
- Verwalten (S200) einer Benutzerebene des Ortsgesprächs zwischen mindestens zwei Endgeräten, wobei das Verwalten (S200) das Herstellen und/oder Aufrechterhalten eines Datenflusses der Benutzerebene beinhaltet, wobei die Benutzerebene auf einer lokalen Seite gehalten wird, die Entitäten von Infrastrukturausrüstung umfasst, die über eine gemeinsame Verbindungsstrecke zu übrigen Entitäten von Infrastrukturausrüstung des Zell-Telekommunikationsnetzes kommuniziert, **gekennzeichnet durch**
- Empfangen (S210) eines Befehls; und
- in Reaktion auf das Empfangen des Befehls, Einfügen (S220) lokaler Benutzerdaten in einen Datenfluss der Benutzerebene.

12. Verfahren nach Anspruch 11, wobei der Befehl von einer räumlich abgesetzten Seite des Zell-Telekommunikationsnetzes kommend empfangen wird, wobei die räumlich abgesetzte Seite die übrigen Entitäten von Infrastrukturausrüstung des Zell-Telekommunikationsnetzes umfasst.

13. Verfahren nach Anspruch 11 oder 12, wobei der Befehl von einem der mindestens zwei Endgeräte kommend empfangen wird.

14. Verfahren nach einem der Ansprüche 11 bis 13, wobei das Verfahren das Verwalten einer Steuerungsebene zwischen der lokalen Seite und einer räumlich abgesetzten Seite des Zell-Telekommunikationsnetzes umfasst.

15. Verfahren nach Anspruch 14, wobei der Befehl über die Steuerungsebene empfangen wird.

16. Verfahren nach einem der Ansprüche 11 bis 15, wobei das Verfahren das Erzeugen (S215) der lokalen Benutzerdaten umfasst.

17. Verfahren nach einem der Ansprüche 11 bis 16, wobei das Verfahren das Abrufen zuvor festgelegter lokaler Benutzerdaten umfasst.

18. Verfahren nach einem der Ansprüche 11 bis 17, wobei die lokalen Benutzerdaten ein Klangsignal darstellen.

19. Verfahren nach Anspruch 18, wobei das Klangsignal eines von Folgendem ist: ein Musiksignal, ein Sprachsignal, ein Tonsignal, ein Dualton-Mehrfrequenzsignal oder ein Inband-Modemsignal.

20. Verfahren zum Betreiben einer Netzwerkentität zur Verwendung in einem Netzwerk-Teilsystem eines Zell-Telekommunikationsnetzes, wobei das Verfahren Folgendes umfasst:
- Verwalten einer Steuerungsebene eines Ortsgesprächs zwischen mindestens zwei Endgeräten, wobei die Benutzerebene des Ortsgesprächs auf einer lokalen Seite gehalten wird, die Entitäten von Infrastrukturausrüstung umfasst, die über eine gemeinsame Verbindungsstrecke zu übrigen Entitäten von Infrastrukturausrüstung des Zell-Telekommunikationsnetzes kommunizieren, **gekennzeichnet durch**
- Empfangen eines Befehls zum Einfügen von Benutzerdaten in einen Datenfluss zu mindestens einem der Endgeräte, wobei der Datenfluss von einer Benutzerebene der Ortsgesprächskommunikation auf einer lokalen Seite des Zell-Telekommunikationsnetzes ist;
- in Reaktion auf das Empfangen des Befehls, Feststellen, ob das mindestens eine Endgerät der Netzwerkentität zugeordnet ist;
- Weiterleiten des empfangenen Befehls an die lokale Seite, wenn das mindestens eine Endgerät der Netzwerkentität zugeordnet ist.

21. Verfahren nach Anspruch 20, wobei die Benutzerdaten ein Klangsignal darstellen.

22. Verfahren nach Anspruch 21, wobei das Klangsignal eines von Folgendem ist: ein Musiksignal, ein Sprachsignal, ein Tonsignal, ein Dualton-Mehrfrequenzsignal oder ein Inband-Modemsignal.

23. Verfahren nach einem der Ansprüche 20 bis 22, wobei das Verfahren das Weiterleiten des empfangenen Befehls an die lokale Seite umfasst, auch wenn das mindestens eine Endgerät nicht der Netzwerkentität zugeordnet ist.

24. Computerprogramm, das in eine Verarbeitungseinheit geladen werden kann, wobei das Computerprogramm Code umfasst, der dafür ausgelegt ist, ein Verfahren nach einem der Ansprüche 1 bis 23 auszuführen.

25. Computerprogrammprodukt, das ein Computerprogramm nach Anspruch 24 umfasst.

26. Vermittlungsentität (30') zur Verwendung in einem Basisstations-Teilsystem eines Zell-Telekommunikationsnetzes, wobei die Vermittlungsentität (30') eine Verarbeitungseinheit (300) und eine Speichereinheit (310) umfasst, die für Folgendes ausgelegt sind:
- Verwalten einer Benutzerebene eines Ortsgesprächs zwischen mindestens zwei Endgeräten, was das Herstellen und/oder Aufrechterhalten eines Datenflusses der Benutzerebene beinhaltet, wobei die Benutzerebene auf einer lokalen Seite gehalten wird, die Entitäten von Infrastrukturausrüstung umfasst, die über eine gemeinsame Verbindungsstrecke zu übrigen Entitäten von Infrastrukturausrüstung des Zell-Telekommunikationsnetzes kommuniziert, **dadurch gekennzeichnet, dass** die Verarbeitungseinheit und die Speichereinheit für Folgendes ausgelegt sind:
- Empfangen eines Befehls; und
- in Reaktion auf den empfangenen Befehl, Einfügen lokaler Benutzerdaten in einen Datenfluss der Benutzerebene.

27. Vermittlungsentität nach Anspruch 26, die für ein Verfahren nach einem der Ansprüche 11 bis 19 ausgelegt ist.

28. Netzwerkentität (63') zur Verwendung in einem Netzwerk-Teilsystem eines Zell-Telekommunikationsnetzes, wobei die Netzwerkentität eine Verarbeitungseinheit (630) und eine Speichereinheit (631) umfasst, die für Folgendes ausgelegt sind:
- Verwalten einer Steuerungsebene eines Ortsgesprächs zwischen mindestens zwei Endgeräten, wobei die Benutzerebene des Ortsgesprächs auf einer lokalen Seite gehalten wird, die Entitäten von Infrastrukturausrüstung umfasst, die über eine gemeinsame Verbindungsstrecke zu übrigen Entitäten von Infrastrukturausrüstung des Zell-Telekommunikationsnetzes kommunizieren, **dadurch gekennzeichnet, dass** die Verarbeitungseinheit und die Speichereinheit für Folgendes ausgelegt sind:
- Empfangen eines Befehls zum Einfügen von Benutzerdaten in einen Datenfluss zu mindestens einem der Endgeräte, wobei der Datenfluss von einer Benutzerebene der Ortsgesprächskommunikation auf einer lokalen Seite des Zell-Telekommunikationsnetzes ist;
- in Reaktion auf den empfangenen Befehl, Feststellen, ob das mindestens eine Endgerät der Netzwerkentität zugeordnet ist;
- Weiterleiten des empfangenen Befehls an die lokale Seite, wenn das mindestens eine Endgerät der Netzwerkentität zugeordnet ist.

29. Netzwerkentität nach Anspruch 28, die für ein Verfahren nach einem der Ansprüche 20 bis 23 ausgelegt ist.

## Revendications

1. Procédé de traitement d'un appel local entre au moins deux terminaux sur un réseau de télécommunications cellulaires, le procédé comprenant l'étape consistant à :
- traiter (S100) un plan usager de l'appel local comprenant l'établissement et/ou le maintien d'un flux de données du plan usager, le plan usager de l'appel local étant conservé sur un côté local du réseau de télécommunications cellulaires, le côté local comprenant des entités d'équipements d'infrastructure qui communiquent par une liaison commune avec d'autres entités d'équipements d'infrastructure du réseau de télécommunications cellulaires ;
**caractérisé par** les étapes consistant à :
- recevoir (S110) une instruction sur le côté local ; et
- à la suite de la réception de l'instruction, insérer (S120) des données locales de l'utilisateur dans un flux de données du plan usager sur le côté local.

2. Procédé selon la revendication 1, dans lequel l'instruction est reçue d'un côté distant du réseau de télécommunications cellulaires, le côté distant comprenant les autres entités d'équipements d'infrastructure du réseau de télécommunications cellulaires.

3. Procédé selon la revendication 1 ou 2, dans lequel l'instruction est reçue d'un desdits au moins deux terminaux.

4. Procédé selon l'une quelconque des revendications 1 à 3, ledit procédé comprenant l'étape consistant à traiter un plan de commande sur le côté local du réseau de télécommunications cellulaires.

5. Procédé selon la revendication 4, dans lequel l'instruction est reçue via le plan de commande.

6. Procédé selon l'une quelconque des revendications 1 à 5, ledit procédé comprenant l'étape consistant à produire les données locales de l'utilisateur sur le côté local.

7. Procédé selon l'une quelconque des revendications 1 à 6, ledit procédé comprenant l'étape consistant à stocker des données locales prédéterminées de l'utilisateur sur le côté local.

8. Procédé selon l'une quelconque des revendications 1 à 7, dans lequel les données locales de l'utilisateur représentent un signal sonore.

9. Procédé selon la revendication 8, dans lequel le signal sonore est l'un des suivants : signal de musique, signal de parole, signal de tonalité, signal multifréquence à double tonalité, signal de modem intrabande.

10. Procédé selon l'une quelconque des revendications 1 à 9, dans lequel au moins un terminal, sur lesdits au moins deux terminaux, est un terminal mobile.

11. Procédé de fonctionnement d'une entité de commutation destinée à être utilisée dans un sous-système de station de base d'un réseau de télécommunications cellulaires, le procédé comprenant les étapes consistant à :
- traiter (S200) un plan usager d'un appel local entre au moins deux terminaux, le traitement (S200) comprenant l'établissement et/ou le maintien du flux de données du plan usager, le plan usager de l'appel local étant conservé sur un côté local comprenant des entités d'équipements d'infrastructure qui communiquent par une liaison commune avec d'autres entités d'équipements d'infrastructure du réseau de télécommunications cellulaires ;
**caractérisé par** les étapes consistant à :
- recevoir (S210) une instruction ; et
- à la suite de la réception de l'instruction, insérer (S220) des données locales de l'utilisateur dans le flux de données du plan usager.

12. Procédé selon la revendication 11, dans lequel l'instruction est reçue d'un côté distant du réseau de télécommunications cellulaires, le côté distant comprenant les autres entités d'équipements d'infrastructure du réseau de télécommunications cellulaires.

13. Procédé selon la revendication 11 ou 12, dans lequel l'instruction est reçue de l'un desdits au moins deux terminaux.

14. Procédé selon l'une quelconque des revendications 11 à 13, ledit procédé comprenant l'étape consistant à traiter un plan de commande entre le côté local et un côté distant du réseau de télécommunications cellulaires.

15. Procédé selon la revendication 14, dans lequel l'instruction est reçue via le plan de commande.

16. Procédé selon l'une quelconque des revendications 11 à 15, ledit procédé comprenant l'étape consistant à produire (S215) les données locales de l'utilisateur.

17. Procédé selon l'une quelconque des revendications 11 à 16, ledit procédé comprenant l'étape consistant à obtenir des données locales de l'utilisateur prédéfinies.

18. Procédé selon l'une quelconque des revendications 11 à 17, dans lequel les données locales de l'utilisateur représentent un signal sonore.

19. Procédé selon la revendication 18, dans lequel le signal sonore est l'un des suivants : signal de musique, signal de parole, signal de tonalité, signal multifréquence à double tonalité, signal de modem intrabande.

20. Procédé de fonctionnement d'une entité de réseau destinée à être utilisée sur un sous-système de réseau d'un réseau de télécommunications cellulaires, le procédé comprenant les étapes consistant à :
- traiter un plan usager d'un appel local entre au moins deux terminaux, le plan usager de l'appel local étant conservé sur un côté local comprenant des entités d'équipements d'infrastructure qui communiquent par une liaison commune avec d'autres entités d'équipements d'infrastructure du réseau de télécommunications cellulaires ;
**caractérisé par** les étapes consistant à :
- recevoir une instruction en vue d'insérer des données de l'utilisateur dans un flux de données adressé à au moins un des terminaux, le flux de données appartenant à un plan usager de la communication de l'appel local, sur un côté local du réseau de télécommunications cellulaires ;
- à la suite de la réception de l'instruction, déterminer si ledit au moins un terminal est associé à l'entité de réseau ;
- acheminer l'instruction reçue vers le côté local si ledit au moins un terminal est associé à l'entité de réseau.

21. Procédé selon la revendication 20, dans lequel les données de l'utilisateur représentent un signal sonore.

22. Procédé selon la revendication 21, dans lequel le signal sonore est l'un des suivants : signal de musique, signal de parole, signal de tonalité, signal multifréquence à double tonalité, signal de modem intrabande.

23. Procédé selon l'une quelconque des revendications 20 à 22, ledit procédé comprenant l'étape consistant à acheminer l'instruction reçue vers le côté local même si ledit au moins un terminal n'est pas associé à l'entité de réseau.

24. Programme d'ordinateur pouvant être chargé dans une unité de traitement, ledit programme d'ordinateur comprenant du code conçu pour exécuter un procédé selon l'une quelconque des revendications 1 à 23.

25. Progiciel d'ordinateur comprenant un programme d'ordinateur selon la revendication 24.

26. Entité de commutation (30') destinée à être utilisée dans un sous-système de station de base d'un réseau de télécommunications cellulaires, l'entité de commutation (30') comprenant une unité de traitement (300) et une unité de mémoire (310) qui sont conçues pour :
- traiter un plan usager d'un appel local entre au moins deux terminaux, comprenant l'établissement et/ou le maintien d'un flux de données du plan usager, le plan usager étant conservé sur un côté local comprenant des entités d'équipements d'infrastructure qui communiquent par une liaison commune avec d'autres entités d'équipements d'infrastructure du réseau de télécommunications cellulaires ;
**caractérisée en ce que** l'unité de traitement et l'unité de mémoire sont en outre conçues pour :
- recevoir une instruction ; et
- insérer des données locales de l'utilisateur dans un flux de données du plan usager à la suite de la réception de l'instruction.

27. Entité de commutation selon la revendication 26, conçue pour un procédé selon l'une quelconque des revendications 11 à 19.

28. Entité de réseau (63') destinée à être utilisée dans un sous-système de réseau d'un réseau de télécommunications cellulaires, l'entité de réseau comprenant une unité de traitement (630) et une unité de mémoire (631) qui sont conçues pour :
- traiter un plan usager d'un appel local entre au moins deux terminaux, le plan usager de l'appel local étant conservé sur un côté local comprenant des entités d'équipements d'infrastructure qui communiquent par une liaison commune avec d'autres entités d'équipements d'infrastructure du réseau de télécommunications cellulaires ;
**caractérisée en ce que** l'unité de traitement et l'unité de mémoire sont en outre conçues pour :
- recevoir une instruction en vue d'insérer des données de l'utilisateur dans un flux de données adressé à au moins un des terminaux, le flux de données appartenant à un plan usager de la communication de l'appel local, sur un côté local du réseau de télécommunications cellulaires ;
- à la suite de la réception de l'instruction, déterminer si ledit au moins un terminal est associé à l'entité de réseau ;
- acheminer l'instruction reçue vers le côté local si ledit au moins un terminal est associé à l'entité de réseau.

29. Entité de réseau selon la revendication 28, conçue pour un procédé selon l'une quelconque des revendications 20 à 23.
